# EUROPÄISCHE PATENTSCHRIFT

(11) **EP 2 741 945 B1**
(45) Veröffentlichungstag und Bekanntmachung des Hinweises auf die Patenterteilung: **21.03.2018**
(21) Anmeldenummer: 12748671.0
(22) Anmeldetag: 10.08.2012
(51) Int. Cl.: B60T 8/17, B60T 13/74, B61H 7/08

(54) **BREMSANLAGE MIT MAGNETSCHIENENBREMSEINRICHTUNG**
BRAKE SYSTEM HAVING AN ELECTROMAGNETIC TRACK BRAKE DEVICE
SYSTÈME DE FREINAGE COMPORTANT UN DISPOSITIF DE FREIN ÉLECTROMAGNÉTIQUE SUR RAIL

(30) Priorität: 12.08.2011 DE 102011110053
(43) Veröffentlichungstag der Anmeldung: 18.06.2014
(73) Patentinhaber: KNORR-BREMSE Systeme für Schienenfahrzeuge GmbH, 80809 München (DE)
(72) Erfinder: ELSTORPFF, Marc-Gregory, 80638 München (DE); LEHMANN, Henry, A-2371 Hinterbrühl (AT); RATHAMMER, Richard, A-2262 Stillfried-Grub (AT)
(86) Internationale Anmeldenummer: PCT/EP2012/065663
(87) Internationale Veröffentlichungsnummer: WO 2013/024016

(56) Entgegenhaltungen:
- EP-A1- 1 712 445
- EP-A2- 1 746 000
- DE-A1- 2 306 156
- DE-B- 1 011 455
- DE-U1-202007 009 724
- GB-A- 1 270 327

## Beschreibung

Die vorliegende Erfindung betrifft eine Bremssteuereinrichtung für eine Bremsanlage eines Schienenfahrzeugs mit einer Magnetschienenbremseinrichtung, eine Bremsanlage mit einer derartigen Bremssteuereinrichtung, ein Schienenfahrzeug sowie ein Verfahren zum Steuern mindestens einer Magnetschienenbremseinrichtung einer Bremsanlage eines Schienenfahrzeugs. Eine Bremssteuereinrichtung mit den Merkmalen des Oberbegriffs des Anspruchs 1 ist jeweils aus den Druckschriften EP 1 712 445 A1, GB 1 270 327 und DE 23 06 156 bekannt.

Moderne Schienenfahrzeuge weisen häufig Bremsanlagen mit mehreren unterschiedlich wirkenden Bremseinrichtungen auf. In der Regel ist eine Reibungsbremseinrichtung wie eine druckbetätigte Bremseinrichtung, etwa eine hydraulische oder pneumatische Bremse, oder eine elektrische oder elektromechanische Bremse als hauptsächlich zu verwendende Betriebsbremse vorgesehen. Daneben werden zusätzlich unter Anderem Wirbelstrombremsen, Retarder oder auch Magnetschienenbremsen eingesetzt. Im Gegensatz zur Wirbelstrombremse ist dabei die Magnetschienenbremseinrichtung eine Reibungsbremseinrichtung, welche bei Betätigung in reibenden Kontakt mit der Schiene gebracht wird. Durch eine Bestromung wird die Magnetschienenbremseinrichtung magnetisiert und haftet stark an der Schiene. Dabei unterliegt die Magnetschienenbremseinrichtung einem nicht unerheblichen Verschleiß. Insbesondere beim Durchführen einer Schnellbremsung oder einer Notbremsung werden Magnetschienenbremseinrichtungen zur Unterstützung der Bremswirkung der normalen Betriebsbremseinrichtung eingesetzt.

Es ist eine Aufgabe der vorliegenden Erfindung, einen verbesserten Betrieb einer Magnetschienenbremseinrichtung zu ermöglichen. Dabei soll insbesondere der Verschleiß der Magnetschienenbremseinrichtung bei einer Bremsung verringert werden.

Diese Aufgabe wird durch die Merkmale der unabhängigen Ansprüche gelöst.

Weitere vorteilhafte Ausgestaltungen und Weiterbildungen der Erfindung ergeben sich aus den abhängigen Ansprüchen.

Im Rahmen dieser Beschreibung kann ein Schienenfahrzeug ein oder mehrere Wagen mit oder ohne eigenen Antrieb und/oder ein Zugfahrzeug in beliebiger Kombination bezeichnen. Insbesondere kann ein Schienenfahrzeug Triebwagen aufweisen. Ein Schienenfahrzeug oder ein Wagen des Schienenfahrzeugs kann Drehgestelle aufweisen, an denen Radachsen des Fahrzeugs angeordnet sind. Die Drehgestelle können an einem Wagenaufbau befestigt sein. Eine Bremsanlage kann mindestens eine Magnetschienenbremseinrichtung und eine Betriebsbremseinrichtung aufweisen. Die Betriebsbremseinrichtung kann eine kraftschlussabhängige Reibungsbremseinrichtung sein, die eine Bremskraft über einen Rad-Schiene-Kontakt zu übertragen vermag. Eine Magnetschienenbremseinrichtung ist keine kraftschlussabhängige Bremseinrichtung in diesem Sinne, da sie ihre Bremskraft nicht über einen Rad-Schiene-Kontakt überträgt, sondern einen eigenen Reibkontakt mit der Schiene herzustellen vermag. Eine kraftschlussabhängige Reibungsbremseinrichtung kann einen Krafterzeuger aufweisen, der bei Betätigung eine Kraft zur Bremsung eines ihm zugeordneten Rades oder einer Radachse ausübt. Der Krafterzeuger kann durch einen hydraulischen oder pneumatischen Bremsdruck oder einen Bremsstrom betätigbar sein. Entsprechend kann die Betriebsbremseinrichtung eine druckbetätigte, also eine hydraulische oder pneumatische, oder eine elektrisch betätigte Bremseinrichtung wie eine elektromechanische Bremseinrichtung sein. Eine Magnetschienenbremseinrichtung kann als Komponenten eine oder mehrere Elektromagneten umfassen, die in Kontakt mit einer Schiene bringbar sind und welche bestrombar sein können. Beim Bestromen können der oder die Elektromagneten der Magnetschienenbremseinrichtung durch einen magnetischen Effekt an der Schiene haften. Es ist vorstellbar, dass eine Magnetschienenbremseinrichtung mindestens eine mechanische und/oder pneumatische und/oder hydraulische Betätigungseinrichtung als Komponente aufweist. Eine solche Betätigungseinrichtung kann dazu geeignet sein, den oder die Elektromagneten und/oder Reibkomponenten der Magnetschienenbremseinrichtung von einer Ruhestellung in eine Bremsstellung und umgekehrt zu bewegen. Es kann vorgesehen sein, dass derartige Betätigungseinrichtungen pneumatisch, hydraulisch oder elektrisch ansteuerbar sind, beispielsweise durch eine Bremssteuereinrichtung. Eine Reibkomponente der Magnetschienenbremseinrichtung kann dazu vorgesehen sein, bei einer Bremsung vermittels der Magnetschienenbremseinrichtung in Reibkontakt mit der Schiene zu stehen. Eine solche Reibkomponente kann ein Elektromagnet sein oder an einem Elektromagnet befestigt sein. Eine Betriebsbremseinrichtung kann insbesondere eine druckbetätigte Bremseinrichtung sein, beispielsweise eine pneumatische oder hydraulische Bremseinrichtung. Bei einer derartigen Bremseinrichtung kann ein Bremsdruck erzeugt werden, über welchen Reibelemente von Reibbremseinrichtungen in reibenden Kontakt miteinander gebracht werden können, um Räder und das Fahrzeug abzubremsen. Eine Betriebsbremseinrichtung kann auch eine elektrische oder elektromechanische Bremseinrichtung sein. Bei einer derartigen Bremseinrichtung kann ein Bremsstrom erzeugt werden, über welchen Reibelemente von Reibbremseinrichtungen in reibenden Kontakt miteinander gebracht werden können, um Räder und das Fahrzeug abzubremsen. Typische Beispiele für derartige Betriebsbremsen sind Scheibenbremsen, Klotzbremsen oder eine Kombination aus Scheiben- und Klotzbremsen. Bei einer druckbetätigten Betriebsbremseinrichtung wird somit ein Bremsdruck durch Ausüben einer Bremskraft auf reibende Elemente in Wärme umgesetzt, während bei einer elektrisch betätigten Betriebsbremseinrichtung ein Bremsstrom durch Ausüben einer Bremskraft auf reibende Elemente in Wärme umgesetzt wird. Bei einer Bremsung werden durch die Betriebsbremseinrichtung ausgeübte Bremsmomente oder Bremskräfte über den Rad-Schiene-Kontakt aufgenommen. Das Maß an Bremsmoment beziehungsweise Bremskraft, das über diesen Rad-Schiene-Kontakt aufgenommen werden kann, wird durch einen Parameter begrenzt, der im Allgemeinen als Adhäsionsbeiwert oder Kraftschlussbeiwert bezeichnet wird. Dieser Wert hängt für ein einzelnes Rad von der Belastung des Rades durch ein auf ihm lastendes Gewicht und insbesondere von den Kontaktbedingungen zwischen Rad und Schiene ab. Insbesondere dann, wenn eine Zwischenschicht zwischen Rad und Schiene ausgebildet ist, wie etwa eine Wasser- oder Laubschicht, kann der Kraftschlussbeiwert sehr niedrig sein. Darüber hinaus hängt der Kraftschlussbeiwert stark von einem herrschenden Radschlupf ab. Der Radschlupf S ist dabei definiert als S=(v_{T}-v_{R})/v_{T}, wobei v_{T} die Translationsgeschwindigkeit des Schienenfahrzeugs bezeichnet und v_{R} die Umlaufgeschwindigkeit des betrachtenden Rades. Liegt der Radschlupf S eines Rades genau bei Null, kann über dieses Rad keine Brems- oder Beschleunigungskraft übertragen werden. Allgemein gilt, dass dann, wenn bei einem gegebenen herrschenden Kraftschlussbeiwert eine Bremskraft oder eine Beschleunigungskraft auf ein Rad ausgeübt wird, welche oberhalb der bei herrschendem Kraftschlussbeiwert übertragbaren Kraft liegt, das betreffende Rad ins Gleiten, Blockieren oder Durchdrehen getrieben werden kann. So ist insbesondere bei einer Bremsung in der Regel darauf zu achten, dass die gemäß dem herrschenden Kraftschlussbeiwert übertragbare Bremskraft nicht überschritten wird. Einer Betriebsbremseinrichtung kann eine Gleitschutzvorrichtung zugeordnet sein, welche dazu ausgebildet ist, ein Gleiten und/oder Blockieren der Räder zu erfassen und gegebenenfalls entgegenzuwirken. Dazu können beispielsweise bei pneumatischen Betriebsbremseinrichtungen Ablassventile vorgesehen sein, welche bei Auslösung der Gleitschutzeinrichtung an geeigneten Stellen den Bremsdruck vermindern, um die übertragene Bremskraft zu verringern. Eine Bremssteuereinrichtung kann ausgebildet sein, eine Magnetschienenbremseinrichtung anzusteuern. Dabei kann die Bremssteuereinrichtung separat für die Magnetschienenbremseinrichtung vorgesehen sein. Eine Bremssteuereinrichtung kann auch zum Ansteuern anderer Bremseinrichtungen der Bremsanlage ausgebildet sein, wie beispielsweise der Betriebsbremseinrichtung. Die Bremssteuereinrichtung kann eine elektronische Steuereinrichtung wie etwa ein Bremsrechner sein. Es ist vorstellbar, dass eine Bremssteuereinrichtung zum Ansteuern der Magnetschienenbremseinrichtung mehrere separate Steuereinheiten umfasst, die unterschiedlichen Elektromagneten und/oder Betätigungseinrichtungen der Magnetschienenbremseinrichtung zugeordnet sein können. Das Ansteuern der Magnetschienenbremseinrichtung kann insbesondere das elektrische und/oder pneumatische und/oder hydraulische und/oder elektrohydraulische und/oder elektropneumatische Ansteuern von Betätigungseinrichtungen der Magnetschienenbremseinrichtung umfassen. Dabei können durch Ansteuern der Betätigungseinrichtungen ein oder mehrere Elektromagnete zwischen einer Ruhestellung und einer Bremsstellung bewegt werden. Bei Bestromung des Elektromagneten kann ein Reibkontakt zwischen der Magnetschienenbremseinrichtung und der Schiene erfolgen. Dabei können Reibkomponenten durch Elektromagneten aus der Bremsstellung in Kontakt mit der Schiene gebracht werden. Es ist auch vorstellbar, dass in der Bremsstellung bereits ein Kontakt zwischen Magnetschienenbremseinrichtung und/oder einer Reibkomponente und der Schiene besteht, der durch das Bestromen verstärkt wird. Zweckmäßigerweise erfolgt ein Bestromen dann, wenn sich der mindestens eine anzusteuernde Elektromagnet in einer Bremsstellung befindet. Bei einigen Fahrzeugen kann auch vorgesehen sein, dass die Magnetschienenbremseinrichtung oder ihre Elektromagnete bereits in der Ruhestellung ausreichend nahe an der Schiene befinden, dass bei einem Bestromen ein Reibkontakt zwischen der Magnetschienenbremseinrichtung oder mindestens einer Reibkomponente und der Schiene erfolgt. In einem solchen Fall kann auf eine Betätigungseinrichtung verzichtet werden, und die Ruhestellung und die Bremsstellung können identisch sein. Insbesondere kann das Ansteuern der Magnetschienenbremseinrichtung das Bestromen und/oder gezielte Versorgen mit Strom und/oder das Unterbrechen einer Stromversorgung eines oder mehrerer Elektromagneten der Magnetschienenbremseinrichtung umfassen. Allgemein kann ein Aktivieren und/oder Betätigen einer Magnetschienenbremseinrichtung das Ansteuern von Komponenten der Magnetschienenbremseinrichtung derart umfassen, dass ein Reibkontakt zwischen Schiene und Magnetschienenbremseinrichtung erfolgt, etwa durch Ansteuern mindestens einer Betätigungseinrichtung, um die Magnetschienenbremseinrichtung in eine Bremsstellung zu bringen, und/oder das Ansteuern zum Bestromen eines oder mehrerer Elektromagneten. Ein Deaktivieren und/oder Lösen einer Magnetschienenbremseinrichtung kann das Ansteuern von Komponenten der Magnetschienenbremseinrichtung derart umfassen, dass ein Reibkontakt unterbrochen wird. Dabei kann eine Stromversorgung eines oder mehrerer Elektromagneten unterbrochen werden und/oder eine Betätigungseinrichtung mindestens eine Komponente der Magnetschienenbremseinrichtung von einer Bremsstellung in eine Ruhestellung bewegen. Es ist vorstellbar, dass eine Magnetschienenbremseinrichtung mehrere separat voneinander ansteuerbare Reibkomponenten und/oder Betätigungseinrichtungen und/oder Elektromagneten aufweist. Somit kann eine Magnetschienenbremseinrichtung teilweise gelöst und teilweise betätigt sein. Ein Ansteuern kann nach Maßgabe vorgegebener Bremsparameter erfolgen, die beispielsweise durch eine zentrale Steuereinrichtung bereitgestellt werden können. Allgemein können Zustandsdaten Daten sein, welche einen oder mehrere bestimmte Parameter und/oder Zustandswerte des Schienenfahrzeugs und/oder der Schiene beschreiben. Schienenzustandsdaten können die Schiene betreffende Zustandsdaten beschreiben. Schienenzustandsdaten können insbesondere einen Zustand beschreiben, welcher einen mechanischen Kontakt zwischen der Schiene und Teilen des Schienenfahrzeugs betrifft, insbesondere Rädern. Zustandsdaten können beispielsweise einen Radschlupf, einen Kraftschlussbeiwert, das Überschreiten oder Unterschreiten eines bestimmten Wertes wie eines Kraftschlussbeiwertes, eine Fahrzeuggeschwindigkeit, eine Raddrehzahl, eine Bremswirkung wie eine Bremskraft oder ein Bremsmoment, usw. beschreiben. Dabei können insbesondere Radschlupfdaten und Daten bezüglich eines Kraftschlussbeiwertes als Schienenzustandsdaten angesehen werden. Zustandsdaten können auf Sensorwerten basieren oder Sensorwerte sein, welche von geeigneten Sensoreinrichtungen bereitgestellt werden. Beispielsweise kann eine Bremsanlage mit einer Sensoreinrichtung verbunden oder verbindbar sein und/oder eine Sensoreinrichtung kann der Bremsanlage zugeordnet sein. Eine Sensoreinrichtung kann dabei beispielsweise Raddrehzahlsensoren und/oder Geschwindigkeitssensoren und/oder Bremswirkungssensoren, etwa Bremskraftsensoren und/oder Bremsmomentsensoren, und/oder Verzögerungssensoren und/oder Beschleunigungssensoren umfassen. Eine Bremssteuereinrichtung der Bremsanlage kann zum Empfangen von Zustandsdaten und/oder Sensorwerten ausgebildet sein. Es ist vorstellbar, dass Sensorwerte Zustandsdaten repräsentieren und/oder dass Zustandsdaten basierend auf Sensorwerten bestimmt werden. Das Bestimmen von Zustandsdaten kann beispielsweise durch eine geeignete Steuereinrichtung erfolgen, etwa durch die Bremssteuereinrichtung der Bremsanlage. Das Bestimmen von Zustandsdaten kann das Empfangen von Sensorwerten und/oder das Auswerten von Sensorwerten umfassen, insbesondere das Berechnen von Zustandsdaten basierend auf Sensorwerten. Es ist auch vorstellbar, dass eine Steuereinrichtung der Bremsanlage, insbesondere die Bremssteuereinrichtung, mit der Sensoreinrichtung und/oder anderen Steuereinrichtungen zur Datenübertragung verbunden ist, um beispielsweise Sensorwerte und/oder Zustandsdaten und/oder Betriebsparameter zu empfangen oder zu senden.

Die vorliegende Erfindung betrifft eine Bremssteuereinrichtung für eine Bremsanlage eines Schienenfahrzeugs, wobei die Bremssteuereinrichtung dazu ausgebildet ist, mindestens eine Magnetschienenbremseinrichtung der Bremsanlage basierend auf Schienenzustandsdaten anzusteuern. Dadurch kann beim Ansteuern der Magnetschienenbremseinrichtung der Zustand der Schiene berücksichtigt werden, insbesondere der Zustand des Kontakts zwischen einem oder mehreren Rädern und der Schiene. Eine Betriebsbremseinrichtung kann Teil der Bremsanlage sein. Allgemein kann die Bremsanlage mindestens eine weitere Bremseinrichtung aufweisen, die keine Magnetschienenbremseinrichtung ist. Die Schienenzustandsdaten können von einer Betriebsbremseinrichtung stammen und/oder Komponenten einer solchen betreffen. Insbesondere können Schienenzustandsdaten auf Sensorwerten von Sensoren und/oder einer Sensoreinrichtung basieren, welche Komponenten einer Betriebsbremseinrichtung zugeordnet sind. Das Ansteuern der Magnetschienenbremseinrichtung kann während einer Bremsung erfolgen, insbesondere während einer Betriebsbremsung oder Anpassungsbremsung. Es ist auch vorstellbar, dass das Ansteuern während einer Schnellbremsung oder Notbremsung erfolgt. Während einer Betriebsbremsung wird eine Geschwindigkeitsanpassung durchgeführt, bei der in der Regel die Bremsanlage nicht vollständig ausgelastet ist. Bei einer Schnell-oder Notbremsung hingegen wird so viel Bremskraft wie möglich aufgebracht, um das Fahrzeug möglichst schnell zu bremsen oder anzuhalten. Dabei ergeben sich insbesondere für Reibbremseinrichtungen wie die Magnetschienenbremseinrichtung oder eine druckbetätigte Bremseinrichtung erhebliche Belastungen und ein erheblicher Verschleiß. Bei einer Betriebsbremsung hingegen ist es in der Regel nicht erforderlich, eine maximale Bremskraft zu erzeugen. Es kann vorgesehen sein, dass die Bremssteuereinrichtung dazu ausgebildet ist, die Magnetschienenbremseinrichtung separat und/oder unabhängig von einer Betriebsbremseinrichtung und/oder weiteren Bremseinrichtungen anzusteuern. Die Bremssteuereinrichtung kann dazu ausgebildet sein, die Magnetschienenbremseinrichtung während einer Betriebsbremsung derart zu betätigen, dass die Magnetschienenbremseinrichtung nicht während des gesamten Bremsvorgangs betätigt und/oder bestromt ist. Insbesondere kann vorgesehen sein, dass die Bremssteuereinrichtung dazu ausgebildet ist, die Magnetschienenbremseinrichtung vor Beendigung einer Bremsung wie einer Betriebsbremsung derart anzusteuern, dass sie nicht weiter zur Bremsung beiträgt. Dazu kann sie beispielsweise in ihre Ruhestellung zurückgebracht werden und/oder aus der Bremsstellung bewegt werden. Während einer Betriebsbremsung kann insbesondere eine Betriebsbremseinrichtung und/oder mindestens eine weitere Bremseinrichtung betätigt sein, so dass die Dauer einer Betriebsbremsung durch die Zeit definiert sein kann, in welcher die Betriebsbremseinrichtung und/oder die mindestens eine weitere Bremseinrichtung betätigt ist. Es kann vorgesehen sein, dass die Bremssteuereinrichtung dazu ausgebildet ist, bei der Ansteuerung der Magnetschienenbremseinrichtung Zustandsdaten zu berücksichtigen, welche insbesondere eine andere Bremseinrichtung betreffen können, beispielsweise eine druckbetätigte Betriebsbremseinrichtung. Es kann zweckmäßig sein, wenn es die Bremssteuereinrichtung vermag, während einer Bremsung, insbesondere einer Betriebsbremsung, eine Bestromung der Magnetschienenbremseinrichtung mit variierender Strömstärke anzusteuern. So kann beispielsweise während einer Bremsung unter Berücksichtigung eines sich verbessernden Schienenzustands eine geringere Bestromung erfolgen, woraus sich ein geringerer Verschleiß der Magnetschienenbremseinrichtung ergibt. Allgemein kann die Magnetschienenbremseinrichtung in Fahrtrichtung vor mindestens einem durch eine weitere Bremseinrichtung zu bremsenden Rad angeordnet sein, insbesondere vor einem durch eine Betriebsbremseinrichtung zu bremsenden Rad. Wird die Magnetschienenbremseinrichtung für eine Bremsung angesteuert, so wird sie in reibenden Kontakt mit der Schiene gebracht. Es ist zweckmäßig, wenn ein reibender Kontakt der Magnetschienenbremseinrichtung mit einer Reibfläche der Schiene erfolgt, welche nachfolgend auch in reibenden Kontakt mit mindestens einer Radfläche des Fahrzeugs gerät. Die Profile der Magnetschienenbremseinrichtung und/oder der Räder können entsprechend ausgebildet sein. Durch den Kontakt der Magnetschienenbremseinrichtung mit der Reibfläche der Schiene wird diese von Zwischenschichten befreit und gereinigt. Somit kann durch Einsatz der Magnetschienenbremseinrichtung der Kraftschlussbeiwert zwischen nachfolgenden Rädern und der Schiene verbessert werden. Aufgrund des verbesserten Kraftschlussbeiwertes kann eine höhere Bremskraft über die Räder auf die Schiene übertragen werden, wodurch die Betriebsbremseinrichtung und/oder eine weitere Bremseinrichtung einen stärkeren Anteil an einer erforderlichen Bremskraft erzeugen kann. Somit kann die Magnetschienenbremseinrichtungen entlastet werden, indem sie beispielsweise geringer bestromt wird oder vor Beendigung der Bremsung durch die Betriebsbremseinrichtung oder weitere Bremseinrichtung durch die Bremssteuereinrichtung deaktiviert wird, d.h. derart angesteuert wird, dass sie nicht mehr bremst. Allgemein kann die Bremssteuereinrichtung dazu ausgebildet sein, einen Schienenzustand während eines Bremsvorgangs zu überwachen und die Magnetschienenbremseinrichtung basierend auf einer Änderung dem Schienenzustand entsprechender Schienenzustandsdaten anzusteuern. Es kann vorgesehen sein, dass die Bremssteuereinrichtung dazu ausgebildet ist, zu überwachen, ob die Schienenzustandsdaten während des Bremsvorgangs und/oder während der Bremsung einen bestimmten vorgegebenen Schwellenwert erreichen, beispielsweise ob sie einen Schwellenwert überschreiten oder unterschreiten. Die Bremssteuereinrichtung kann dazu ausgebildet sein, bei Erreichen eines Schwellenwertes die Magnetschienenreinrichtung zu aktivieren oder zu deaktivieren. Es kann vorgesehen sein, dass die Bremssteuereinrichtung dazu ausgebildet ist, die Magnetschieneneinrichtung bei Erreichen eines ersten Schwellenwertes zu aktivieren und bei Erreichen eines zweiten Schwellenwertes zu deaktivieren. Ein Schwellenwert kann in Abhängigkeit von einer Bremsanforderung und/oder einer gewünschten Verzögerung und/oder einer Fahrzeuggeschwindigkeit berechnet und/oder bestimmt sein. Es kann vorgesehen sein, dass die Bremssteuereinrichtung dazu ausgebildet ist, die Schienenzustandsdaten zu überwachen. Eine Bremsanforderung und/oder gewünschte Verzögerung kann beispielsweise durch einen Zugrechner bereitgestellt und/oder durch einen Zugführer bereitgestellt sein.

Die Bremssteuereinrichtung kann dazu ausgebildet sein, die Magnetschienenbremseinrichtung basierend auf Geschwindigkeitsdaten anzusteuern. Die Geschwindigkeitsdaten können insbesondere eine Fahrzeuggeschwindigkeit betreffen. Die Geschwindigkeitsdaten können Zustandsdaten sein, welche durch eine geeignete Sensoreinrichtung ermittelt werden, beispielsweise durch Geschwindigkeitssensoren und/oder basierend auf Daten von Raddrehzahlsensoren. Die Geschwindigkeitsdaten können von einer zur Datenübertragung mit der Bremssteuereinrichtung verbundenen weiteren Steuereinrichtung übertragbar sein. Somit kann die aktuelle Geschwindigkeit bei der Bremsung auch für die Magnetschienenbremseinrichtung berücksichtigt werden. Die Fahrzeuggeschwindigkeit kann insbesondere bei hohen Fahrzeuggeschwindigkeiten auch einen starken Einfluss auf den Schienenzustand haben, insbesondere auf einen Kraftschlussbeiwert. Alternativ oder zusätzlich kann die Bremssteuereinrichtung dazu ausgebildet sein, die Magnetschienenbremseinrichtung basierend auf Zustandsdaten anzusteuern, welche eine durch eine Betriebsbremseinrichtung ausgeübte Bremskraft und/oder ein entsprechendes Bremsmoment beschreiben. Derartige Zustandsdaten können auf Sensorwerten basieren, welche durch mindestens einen Bremswirkungssensor wie einen Bremskraftsensor und/oder einen Bremsmomentensensor ermittelt und bereitgestellt werden. Entsprechende Sensoren können der Bremsanlage zur Überwachung der Betriebsbremseinrichtung zugeordnet sein.

Es ist vorstellbar, dass die Schienenzustandsdaten Radschlupfdaten umfassen. Dadurch kann ein besonders wichtiger Parameter für den Kraftschlussbeiwert berücksichtigt werden. Die Radschlupfdaten können ein einzelnes Rad oder mehrere Räder betreffen. Es ist insbesondere vorstellbar, dass die Radschlupfdaten den Radschlupf eines Rades oder einer Radachse betreffen, die in Fahrtrichtung hinter der Magnetschienenbremseinrichtung oder einer entsprechenden Reibkomponente angeordnet sind, ohne dass zwischen Magnetschienenbremseinrichtung oder einer entsprechenden Reibkomponente und dem betreffenden Rad oder Rädern weitere Räder angeordnet sind. Somit liegen Magnetschienenbremseinrichtungen oder die Reibkomponente und die Räder örtlich nahe beieinander und die Radschlupfdaten können als repräsentativ für den Schienenzustand nahe bei der Magnetschienenbremseinrichtung oder die Reibkomponente dienen. Alternativ oder zusätzlich können die Radschlupfdaten auch mindestens ein Rad betreffen, welches in Fahrtrichtung vor der Magnetschienenbremseinrichtung oder einer entsprechenden Reibkomponente angeordnet ist.

Bei einer Weiterbildung kann vorgesehen sein, dass die Schienenzustandsdaten von einer Gleitschutzeinrichtung an die Bremssteuereinrichtung übertragbar sind. Somit können die Schienenzustandsdaten von der Gleitschutzeinrichtung übertragen werden. Eine derartige Gleitschutzeinrichtung ist in der Regel insbesondere dazu ausgebildet, ein Blockieren eines Rades zu erkennen. Die Gleitschutzeinrichtung kann dazu ausgebildet sein, beim Blockieren oder Gleiten eines Rades und/oder beim Auslösen des Gleitschutzes ein entsprechendes Signal zu erzeugen, welches als einen Schienenzustand repräsentierend angesehen werden kann. Denn beim Blockieren oder Gleiten eines Rades wird mehr Bremskraft auf das Rad ausgeübt, als über den Rad-Schiene-Kontakt aufgenommen werden kann, wodurch sich auf dem Kraftschlussbeiwert beziehungsweise auf das Überschreiten eines bestimmten Kraftschlusses zurückgeschlossen werden kann. Umgekehrt kann dann, wenn die Gleitschutzeinrichtung das Beenden eines Blockierens erkennt, ein entsprechendes Signal an die Bremssteuereinrichtung übermittelbar sein. Denn auch aus dem Lösen des Gleitschutzes oder dem Beenden einer Aktivierung des Gleitschutzes kann analog auf einen Kraftschlussbeiwert oder ein Unterschreiten eines Kraftschlusses geschlossen werden. Somit können für eine Gleitschutzeinrichtung bereits vorhandene Sensoren und von ihnen bereitgestellte Signale beziehungsweise Zustandsdaten als Schienenzustandsdaten für die Bremssteuereinrichtung der Magnetschienenbremseinrichtung verwendet werden. Die Gleitschutzeinrichtung kann beispielsweise Raddrehzahlsensoren und/oder Ventile zum Verringern eines Bremsdrucks aufweisen.

Besonders zweckmäßig kann es sein, wenn die Schienenzustandsdaten Räder betreffen, die in Fahrtrichtung des Schienenfahrzeugs vor der mindestens einen Magnetschienenbremseinrichtung und/oder einer zugeordneten Reibkomponente angeordnet sind. Insbesondere können die Schienenzustandsdaten Räder betreffen, die in Fahrtrichtung vor einem oder mehreren Elektromagneten der Magnetschienenbremseinrichtung angeordnet sind, die einen Kontakt zur Schiene herzustellen vermögen. Die Schienenzustandsdaten beschreiben in diesem Fall den Kontakt zwischen der Schiene und Rädern, die vor der Magnetschienenbremseinrichtung angeordnet sind. Die Daten beschreiben damit einen Schienenzustand, der in Fahrtrichtung vor der Magnetschienenbremseinrichtung liegt und der somit durch Einsatz der Magnetschienenbremseinrichtung zumindest für nachfolgende Räder beeinflussbar ist. Besonders zweckmäßig kann es dabei sein, wenn die Magnetschienenbremseinrichtung oder mindestens eine Reibkomponente der Magnetschienenbremseinrichtung in Längsrichtung oder Fahrtrichtung des Schienenfahrzeugs gesehen zwischen mehreren Rädern angeordnet ist. Die Räder können dabei auf einem gemeinsamen Drehgestell angeordnet sein, auf dem auch zumindest eine Reibkomponente und/oder ein Elektromagnet der Magnetschienenbremseinrichtung angeordnet sein kann. Es kann zweckmäßig sein, wenn die Bremssteuereinrichtung dazu ausgebildet ist, basierend auf Schienenzustandsdaten, welche den Schienenzustand vor der Magnetschienenbremseinrichtung betreffen, die Magnetschienenbremseinrichtung anzusteuern.

Die Bremssteuereinrichtung kann dazu ausgebildet sein, die Magnetschienenbremseinrichtung zu deaktivieren, wenn vordefinierte Schienenzustandsbedingungen erreicht sind. Das Deaktivieren kann insbesondere das Unterbrechen einer Stromversorgung und/oder das Ansteuern einer Betätigungseinrichtung der Magnetschienenbremseinrichtung derart umfassen, dass die Magnetschienenbremseinrichtung in ihre Ruhestellung gebracht wird. Die vordefinierten Schienenzustandsbedingungen können beispielsweise einen bestimmten Kraftschlussbeiwert betreffen, der vorliegen muss, damit die Betriebsbremseinrichtung ausreicht, um die gewünschte Bremswirkung zu erzeugen. Dabei kann gegebenenfalls die Mitwirkung weiterer Bremseinrichtungen wie beispielsweise einer linearen Wirbelstrombremseinrichtung berücksichtigt werden.

Insbesondere kann vorgesehen sein, dass die Schienenzustandsdaten mindestens einen Kraftschluss und/oder einen Kraftschlussbeiwert betreffen. Somit kann dieser für die Bremsung wichtige Wert insbesondere bei Betriebsbremsungen oder Anpassungsbremsungen berücksichtigt werden, um die Magnetschienenbremseinrichtung zu schonen. Es ist vorstellbar, dass die Bremssteuereinrichtung dazu ausgebildet ist, die Magnetschienenbremseinrichtung kraftschlussabhängig anzusteuern. Der Kraftschlussbeiwert kann basierend auf Daten einer Gleitschutzeinrichtung und/oder Daten von Raddrehzahlsensoren und/oder Radschlupfdaten und/oder Bremswirkungsdaten wie Bremskraftdaten und/oder Bremsmomentdaten, insbesondere in Verbindung mit Bremsdruckdaten und/oder Bremsstromdaten, bestimmt und/oder berechnet werden. Es kann vorgesehen sein, dass die Bremssteuereinrichtung dazu ausgebildet ist, einen Kraftschlussbeiwert für mindestens ein Rad während einer Bremsung zu überwachen. Wird durch Einsatz der Magnetschienenbremseinrichtung der Reibkontakt zwischen dem mindestens einem Rad und der Schiene so verbessert, dass der Kraftschlussbeiwert einen bestimmten Schwellenwert überschreitet, kann die Bremssteuereinrichtung die Magnetschienenbremseinrichtung deaktivieren oder ihre Bestromung verringern. Es können mehrere Schwellenwerte definiert sein, bei deren Überschreiten jeweils eine unterschiedliche Bestromung vorgesehen sein kann.

Die vorliegende Erfindung betrifft außerdem eine Bremsanlage für ein Schienenfahrzeug mit mindestens einer Magnetschienenbremseinrichtung und einer hierein beschriebenen Bremssteuereinrichtung. Die Bremssteuereinrichtung kann zur Ansteuerung der Magnetschienenbremseinrichtung ausgebildet sein. Es ist vorstellbar, dass die Bremsanlage eine hierin beschriebene Bremsanlage ist. Die Bremsanlage kann mindestens eine weitere Bremseinrichtung umfassen, welche insbesondere eine Betriebsbremseinrichtung sein kann. Die Betriebsbremseinrichtung kann eine elektrisch betätigte oder eine druckbetätigte Betriebsbremseinrichtung sein, insbesondere eine pneumatische oder hydraulische Betriebsbremseinrichtung. Die Betriebsbremseinrichtung sowie gegebenenfalls weitere Bremseinrichtungen, wie etwa eine lineare Wirbelstrombremseinrichtung, können durch eine elektronische Steuereinrichtung ansteuerbar sein. Die Steuereinrichtung kann die Bremssteuereinrichtung sein. Es ist vorstellbar, dass die Bremssteuereinrichtung die Steuereinrichtungen für die weiteren Bremseinrichtungen umfasst. Den Bremseinrichtungen der Bremsanlage können geeignete Sensoren einer Sensoreinrichtung zugeordnet sein. Die Sensoreinrichtung kann Komponente der Bremsanlage sein. Sensoren können beispielsweise Raddrehzahlsensoren und/oder Bremswirkungssensoren, wie etwa Bremskraftsensoren und/oder Bremsmomentsensoren, und/oder Geschwindigkeitssensoren und/oder Bremsdrucksensoren und/oder Bremsstromsensoren sein.

Die vorliegende Erfindung betrifft außerdem ein Schienenfahrzeug mit einer hierin beschriebenen Bremsanlage und/oder einer hierin beschriebenen Bremssteuereinrichtung.

Außerdem betrifft die Erfindung ein Verfahren zum Ansteuern mindestens einer Magnetschienenbremseinrichtung einer Bremsanlage eines Schienenfahrzeugs, bei dem die mindestens eine Magnetschienenbremseinrichtung von einer Bremssteuereinrichtung basierend auf Schienenzustandsdaten angesteuert wird. Die Bremssteuereinrichtung kann eine hierin beschriebene Bremssteuereinrichtung sein. Die Bremsanlage kann eine hierin beschriebene Bremsanlage sein. Des Weiteren kann die Magnetschienenbremseinrichtung eine hierin beschriebene Magnetschienenbremseinrichtung sein. Die Bremssteuereinrichtung kann die Magnetschienenbremseinrichtung basierend auf Geschwindigkeitsdaten ansteuern. Die Schienenzustandsdaten können Radschlupfdaten umfassen. Es ist vorstellbar, dass die Schienenzustandsdaten von einer Gleitschutzeinrichtung übermittelt werden. Die Schienenzustandsdaten können Räder betreffen, die in Fahrtrichtung des Schienenfahrzeugs vor der mindestens einen Magnetschienenbremseinrichtung angeordnet sind. Die Bremssteuereinrichtung kann die Magnetschienenbremseinrichtung deaktivieren, wenn vorgefertigte Schienenzustandsbedingungen erreicht sind. Es ist vorstellbar, dass die Schienenzustandsdaten einen Kraftschluss und/oder einen Kraftschlussbeiwert betreffen oder umfassen.

Die Erfindung wird nun mit Bezug auf die begleitenden Zeichnungen anhand bevorzugter Ausführungsformen beispielhaft erläutert.

Es zeigen:
- Figur 1: eine schematische Darstellung einer Bremsanlage eines Schienenfahrzeugs mit einer Bremssteuereinrichtung und
- Figur 2: schematisches Flussdiagramm eines Verfahrens zum Ansteuern mindestens einer Magnetschienenbremseinrichtung.

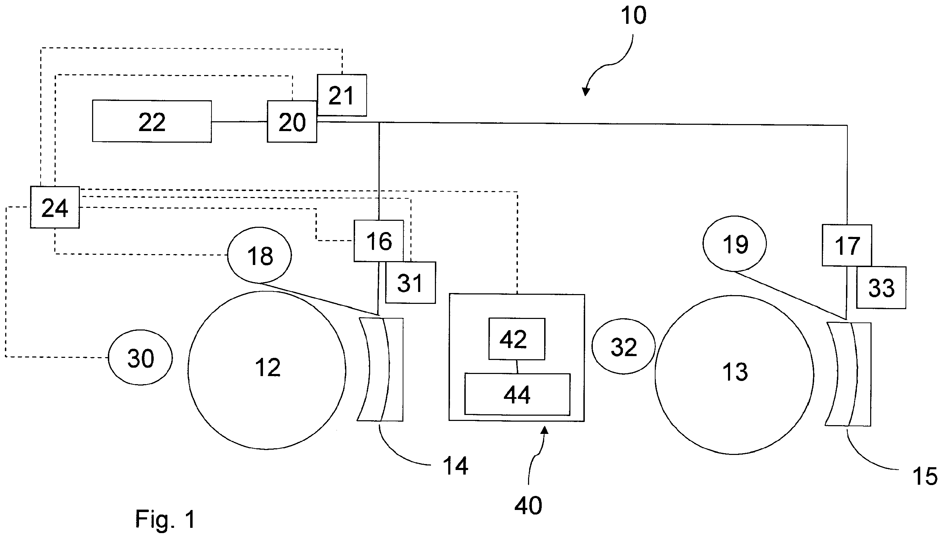

Figur 1 zeigt schematisch eine Bremsanlage 10 eines Schienenfahrzeugs mit einer pneumatischen Betriebsbremse. Mechanische und pneumatische Verbindungen und Leitungen sind mit durchgezogenen Linien dargestellt, während elektrische Verbindungen oder Kommunikationskanäle gestrichelt dargestellt sind. Die Bremsanlage 10 ist dazu vorgesehen, Räder 12 und 13 des Schienenfahrzeugs zu bremsen. In diesem Beispiel befinden sich die Räder 12 und 13 auf unterschiedlichen Radachsen, aber einem Drehgestell. Dem ersten Rad 12 ist ein erster Bremsklotz 14 zugeordnet. Dem zweiten Rad 13 ist ein zweiter Bremsklotz 15 zugeordnet. Jeder der Bremsklötze 14, 15 weist einen Bremsbelag auf, der dann, wenn der Bremsklotz mit dem Bremsbelag an die Lauffläche des zugeordneten Rades 12, 13 gedrückt wird, das zugeordnete Rad abbremst. Der Bremsklotz 14 ist durch einen Krafterzeuger 16 zum Bremsen betätigbar. Der Krafterzeuger 16 ist über eine Versorgungsleitung mit einer Hauptsteuerventileinrichtung 20 verbunden. Über die Hauptsteuerventileinrichtung 20 kann dem Krafterzeuger 16 Druckluft zugeführt werden. Ähnlich ist dem Bremsklotz 15 ein Krafterzeuger 17 zugeordnet, der ebenfalls über die Hauptsteuerventileinrichtung 20 mit Druckluft zur Betätigung des Krafterzeugers versorgt werden kann, um den Bremsklotz 15 mit der Radlauffläche des Rades 13 in Kontakt zu bringen. Die Hauptsteuerventileinrichtung 20 ist mit einer Druckluftvorratseinrichtung 22 verbunden, aus der sie Druckluft entnehmen kann, um sie bei einer Bremsung den Krafterzeugern 16, 17 bereitzustellen. Ferner ist eine als Bremsrechner ausgebildete elektronische Bremssteuereinrichtung 24 vorgesehen, welche es vermag, die Hauptsteuerventileinrichtung 20 anzusteuern. Dazu kann die Hauptsteuerventileinrichtung 20 insbesondere eine oder mehrere Magnetventile aufweisen, die durch die Bremssteuereinrichtung 24 ansteuerbar sind. Die Bremssteuereinrichtung 24 vermag es Bremsdaten zu empfangen, beispielsweise von einem Zugrechner. Bremsdaten können beispielsweise eine Bremsanforderung, Fahrzeuggeschwindigkeit und/oder eine gewünschte Verzögerung betreffen. Aus Gründen der Übersicht sind die elektrischen Steuerleitungen für die dem zweiten Rad zugeordneten Komponenten nicht dargestellt. Sie sind allerdings mit den dem ersten Rad und seinen Komponenten zugeordneten Steuerleitungen vergleichbar. Dem ersten Rad 12 ist ferner ein Bremswirkungssensor 18 zugeordnet, der es vermag, eine bei einer Bremsung auf den Bremsklotz 14 ausgeübte Bremskraft und/oder ein Bremsmoment zu ermitteln. Der Bremswirkungssensor 18 kann somit als Bremskraftsensor angesehen werden. Ein derartiger Bremswirkungssensor kann beispielsweise einen oder mehrere Dehnungsmessstreifen aufweisen. Der Sensor 18 ist zur Übertragung von Daten an die elektronische Bremssteuereinrichtung 24 angeschlossen. Ferner ist dem Rad 12 ein erster Raddrehzahlsensor 30 zugeordnet, welcher die Drehzahl des Rades 12 zu erfassen vermag. Auch dieser Sensor ist zur Datenübertragung mit der elektronischen Steuereinrichtung 24 verbunden. Analog ist dem zweiten Rad ein zweiter Bremswirkungssensor 19 zugeordnet, welcher eine auf den Bremsklotz 15 ausgeübte Bremskraft und/oder ein Bremsmoment zu ermitteln vermag. Darüber hinaus ist dem zweiten Rad 13 auch ein zweiter Raddrehzahlsensor 32 zugeordnet. Die Sensoren 18, 19 können jeweils als Teil einer Bremswirkungssensoreinrichtung angesehen werden. Die Raddrehzahlsensoren 30, 32 können jeweils als Teil einer Raddrehzahlsensoreinrichtung angesehen werden. Die Krafterzeuger 16, 17 können jeweils pneumatische Zylinder umfassen, die bei Beaufschlagung mit einem Bremsdruck eine Bremskraft auf den zugeordneten Bremsklotz 14, 15 ausüben. Die Krafterzeuger 16, 17 können ferner jeweils eine durch die elektronische Steuereinrichtung 24 ansteuerbare Steuerventileinrichtung aufweisen, über die ein durch die Hauptsteuerventileinrichtung 20 bereitgestellter Hauptbremsdruck individuell für den jeweiligen pneumatischen Zylinder der Krafterzeuger 16, 17 eingestellt werden kann. Somit können insbesondere die Krafterzeuger 16, 17 nach Maßgabe der elektronischen Steuereinrichtung 24 unterschiedliche Bremsdrücke an die Bremsklötze 14, 15 anlegen und somit die Reibbremseinrichtungen asymmetrisch oder separat betätigen oder ansteuern. Der Hauptsteuerventileinrichtung 20 ist ein Hauptbremsdrucksensor 21 zugeordnet, der den durch die Hauptsteuerventileinrichtung 20 bereitgestellten Hauptbremsdruck zu erfassen vermag. Der Drucksensor 21 ist zur Datenübertragung mit der elektronischen Steuereinrichtung 24 verbunden. Ferner ist dem Krafterzeuger 16 ein erster Bremsdrucksensor 31 zugeordnet, und dem zweiten Krafterzeuger 17 ein zweiter Bremsdrucksensor 33. Der erste und der zweite Bremsdrucksensor 31, 33 sind jeweils dazu ausgebildet, dem individuell zum Erzeugen einer Bremskraft durch den zugeordneten Krafterzeuger 16, 17 bereitgestellten Bremsdruck zu erfassen. Die Sensoren 31, 33 sowie der Hauptbremsdrucksensor 21 können als Teil einer Bremsdrucksensoreinrichtung angesehen werden. Die Bremsdrucksensoren 21, 31, 33 sind ebenfalls zur Datenübertragung mit der elektronischen Bremssteuereinrichtung 24 verbunden. Somit kann die elektronische Bremssteuereinrichtung 24 einerseits den eingeleiteten Hauptbremsdruck hinter der Hauptsteuerventileinrichtung 20 erfassen. Andererseits empfängt die Bremssteuereinrichtung 24 jeweils den individuell zur Erzeugung von Bremskraft bei den einzelnen Krafterzeugern 16, 17 wirksamen Bremsdruck. In der Figur 1 kann der Krafterzeuger 16 mit dem Bremsklotz 14 als erste Reibbremseinrichtung angesehen werden. Der Krafterzeuger 17 und der zweite Bremsklotz 15 können als zweite Reibbremseinrichtung angesehen werden. Es versteht sich, dass beide Reibbremseinrichtungen zugehörige Bremsgestänge und Aufhängungen aufweisen können, die nicht gezeigt sind. Die Raddrehzahlsensoren 30, 32 und die den Krafterzeugern 16, 17 zugeordneten Steuerventileinrichtungen können Funktionen einer Gleitschutzeinrichtung übernehmen und/oder als Teile einer solchen angesehen werden. Die Hauptsteuerventileinrichtung 20 zusammen mit den Reibbremseinrichtungen kann als pneumatische Bremsvorrichtung und insbesondere als Betriebsbremseinrichtung angesehen werden. Die Raddrehzahlsensoren 30, 32, die Bremswirkungssensoren 18, 19 sowie die Drucksensoren 21, 31, 33 können somit jeweils als entsprechenden Komponenten der Betriebsbremseinrichtung zugeordnete Sensoren betrachtet werden. Statt als Klotzbremsen können die Reibbremseinrichtungen auch als Scheibenbremsen ausgebildet sein. Auch in diesem Fall kann jeweils ein Bremswirkungssensor vorgesehen sein, welcher eine bei der Bremsung ausgeübte Bremskraft und/oder ein Bremsmoment zu erfassen und entsprechende Bremsdaten an die elektronische Bremssteuereinrichtung 24 zu übertragen vermag. Die Bremssteuereinrichtung 24 ist dazu ausgebildet, von den Bremswirkungssensoren 18, 19 Bremswirkungsdaten und von den Bremsdrucksensoren 21, 31, 33 Bremsdruckdaten zu empfangen. Ferner ordnet die Bremssteuereinrichtung 24 die Bremsdruckdaten entsprechenden Bremswirkungsdaten zu und überwacht die einander zugeordneten Daten. Die Bremsanlage 10 umfasst ferner eine Magnetschienenbremseinrichtung 40 mit einer Betätigungseinrichtung 42 und einer Reibkomponente 44, die zwischen den Rädern 12, 13 auf dem gleichen Drehgestell angeordnet sind. Die Betätigungseinrichtung 42 ist dazu vorgesehen, die Reibkomponente 44 bei entsprechender Ansteuerung von einer Ruhestellung in eine Bremsstellung und umgekehrt zu bewegen. In diesem Beispiel vermag es die Betätigungseinrichtung 42, einen pneumatischen Druck oder dessen Wegfallen in eine Bewegung der Reibkomponente 44 umzusetzen. Die Reibkomponente 44 weist einen Elektromagneten auf, welcher dann, wenn er bestromt wird, die Reibkomponente 44 aus der Bremsstellung in reibenden Kontakt mit der Schiene zu bringen vermag. Die Bremssteuereinrichtung 24 ist zur Ansteuerung mit der Magnetschienenbremseinrichtung 40 verbunden und vermag es insbesondere, die Betätigungseinrichtung 42 anzusteuern. Darüber hinaus ist die Bremssteuereinrichtung 24 dazu ausgebildet, die Bestromung des Elektromagneten der Reibkomponente 44 anzusteuern. Es ist vorgesehen, dass die Bremssteuereinrichtung 24 eine Bestromung mit variabler Stromstärke anzusteuern vermag, so dass sich je nach angesteuerter Strömstärke ein unterschiedlich starker Reibkontakt zwischen Schiene und Magnetschienenbremseinrichtung 40 ergibt. Zur Versorgung mit Strom kann die Reibkomponente 44 an das Bordnetz des Schienenfahrzeugs und/oder an eine davon unabhängige Stromquelle angeschlossen oder anschließbar sein. Die Bremsteuereinrichtung 24 ist dazu ausgebildet, die Magnetschienenbremseinrichtung 40 basierend auf Schienenzustandsdaten anzusteuern. Die Schienenzustandsdaten stammen von Sensoren und/oder basieren auf Zustandsdaten, welche den Reibbremseinrichtungen der pneumatischen Bremsvorrichtung der Bremsanlage 10 zugeordnet sind, also der Betriebsbremseinrichtung. Die Zustandsdaten basieren insbesondere auf Daten der Sensoren 18, 19, 21, 30, 31, 32, 33. Es ist vorgesehen, dass die Bremssteuereinrichtung basierend auf von diesen Sensoren bestimmten Daten Schienenzustandsdaten bestimmt, welche insbesondere einen Kraftschluss zwischen den Rädern 12, 13 und der Schiene betreffen. So kann die Bremssteuereinrichtung 24 aus Daten der Raddrehzahlsensoren 30, 32 und/oder aus einem basierend auf diesen Daten bestimmten Radschlupf bestimmen, ob Gleiten oder Blockieren eines der Räder 12, 13 auftritt. Alternativ oder zusätzlich kann jeweils ein für die Räder 12, 13 herrschender Kraftschlussbeiwert bestimmt werden. Basierend auf derartigen Schienenzustandsdaten steuert die Bremssteuereinrichtung 24 die Magnetschienenbremseinrichtung 40 kraftschlussabhängig an.

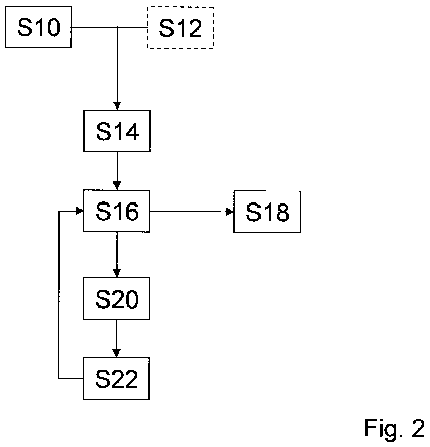

In Figur 2 ist ein Flussdiagramm eines Verfahrens zum Ansteuern mindestens einer Magnetschienenbremseinrichtung einer Bremsanlage eines Schienenfahrzeugs. Die Bremsanlage kann beispielsweise eine Bremsanlage sein, wie sie in Figur 1 gezeigt ist. In einem Schritt S10 empfängt eine Bremssteuereinrichtung Schienenzustandsdaten. Es kann vorgesehen sein, dass die Bremssteuereinrichtung im Schritt S10 die empfangenen Schienenzustandsdaten bearbeitet, um beispielsweise eine geeignete nachfolgende Ansteuerung zu ermitteln. In einem optionalen Schritt S12, welcher auf den Schritt S10 folgen kann, diesem vorausgehen kann oder auch parallel dazu ausgeführt werden kann, kann die Bremssteuereinrichtung Bremsdaten empfangen. Diese Bremsdaten können beispielsweise angeben, dass eine Bremsung erfolgen soll, oder dass und/oder in welchem Umfang eine Betriebsbremseinrichtung oder weitere Bremseinrichtungen betätigt werden sollen. In einem Schritt S14 stellt die Bremssteuereinrichtung die Magnetschienenbremseinrichtung basierend auf dem in Schritt S10 und gegebenenfalls in Schritt S12 empfangenen Daten ein. Insbesondere dann, wenn eine Bremsung durchgeführt werden soll, kann die Bremssteuereinrichtung die Magnetschienenbremsung für eine Bremsung ansteuern. Dabei kann sie sie gegebenenfalls Betätigungseinrichtungen ansteuern, um entsprechende Elemente der Magnetschienenbremseinrichtung in eine schienennahe oder schienenberührende Stellung zu bringen. Gleichzeitig oder nachfolgend kann die Bremssteuereinrichtung eine Bestromung von Elektromagneten ansteuern, um den reibenden Kontakt der Magnetschienenbremseinrichtung mit der Schiene herzustellen. In einem nachfolgenden Schritt S16 kann die Bremssteuereinrichtung weitere Schienenzustandsdaten und/oder Bremsdaten und/oder Zustandsdaten des Fahrzeugs empfangen. Empfängt sie zum Beispiel Bremsdaten, welche eine Beendigung der Bremsung anzeigen, kann sie in einem nachfolgenden Schritt S18 die Magnetschienenbremseinrichtung deaktivieren. Lassen die Bremsdaten darauf schließen, dass die Bremsung weiterhin erfolgen soll, kann in einem Schritt S20 die Bremssteuereinrichtung überprüfen, ob vordefinierte Schienenzustandsbedingungen erreicht sind. Dies kann dadurch erreicht werden, dass Schienenzustandsdaten mit entsprechenden Schienenzustandsbedingungen verglichen werden, die beispielsweise in einer Speichereinrichtung der Bremssteuereinrichtung abgelegt sein können. Sind bestimmte vordefinierte Schienenzustandsbedingungen erreicht, liegt etwa ein vorgegebener Mindest-Kraftschlussbeiwert vor, kann die Bremssteuereinrichtung in einem Schritt S22 auch während einer fortlaufenden Bremsung durch die Betriebsbremseinrichtung oder weitere Bremseinrichtungen die Magnetschienenbremseinrichtung deaktivieren oder zumindest mit einem geringeren Maß an Strom versorgen, um die Bremswirkung der Magnetschienenbremseinrichtung und damit auch den Verschleiß der Magnetschienenbremseinrichtung zu verringern. Andernfalls kann die Bremsung durch die Magnetschienenbremseinrichtung fortgeführt werden, etwa indem zu Schritt S16 zurückgekehrt wird.

### Bezugszeichenliste

- 10: Bremsanlage
- 12: erstes Rad
- 13: zweites Rad
- 14: erster Bremsklotz
- 15: zweiter Bremsklotz
- 16: erster Krafterzeuger
- 17: zweiter Krafterzeuger
- 18: erster Bremskraftsensor
- 19: zweiter Bremskraftsensor
- 20: Hauptsteuerventileinrichtung
- 21: Hauptbremsdrucksensor
- 22: Druckluftvorratseinrichtung
- 24: Bremssteuereinrichtung
- 30: erster Raddrehzahlsensor
- 31: erster Bremsdrucksensor
- 32: zweiter Raddrehzahlsensor
- 33: zweiter Bremsdrucksensor
- 40: Magnetschienenbremseinrichtung
- 42: Betätigungseinrichtung
- 44: Reibkomponente

## Patentansprüche

1. Bremssteuereinrichtung (24) für eine Bremsanlage (10) eines Schienenfahrzeugs,
wobei die Bremssteuereinrichtung (24) dazu ausgebildet ist, mindestens eine Magnetschienenbremseinrichtung (40) der Bremsanlage (10) basierend auf Schienenzustandsdaten anzusteuern,
**dadurch gekennzeichnet, dass**
die Bremssteuereinrichtung (24) dazu ausgebildet ist, während einer Bremsung eine Bestromung der Magnetschienenbremseinrichtung (40) mit variierender Stromstärke anzusteuern, wobei während einer Bremsung unter Berücksichtigung eines sich verbessernden Schienenzustands eine geringere Bestromung erfolgt.

2. Bremssteuereinrichtung nach Anspruch 1, wobei die Bremssteuereinrichtung (24) ferner dazu ausgebildet ist, die Magnetschienenbremseinrichtung (40) basierend auf Geschwindigkeitsdaten anzusteuern.

3. Bremssteuereinrichtung nach einem der bisherigen Ansprüche, wobei die Schienenzustandsdaten Radschlupfdaten umfassen und/oder wobei die Schienenzustandsdaten mindestens einen Kraftschluss und/oder Kraftschlussbeiwert betreffen.

4. Bremssteuereinrichtung nach einem der bisherigen Ansprüche, wobei die Schienenzustandsdaten von einer Gleitschutzeinrichtung an die Bremssteuereinrichtung (24) übertragbar sind.

5. Bremssteuereinrichtung nach einem der bisherigen Ansprüche, wobei die Schienenzustandsdaten Räder betreffen, die in Fahrtrichtung des Schienenfahrzeugs hinter der mindestens einen Magnetschienenbremseinrichtung (40) und/oder einer Reibkomponente (44) der Magnetschienenbremseinrichtung (40) angeordnet sind.

6. Bremssteuereinrichtung nach einem der bisherigen Ansprüche, wobei die Bremssteuereinrichtung (24) dazu ausgebildet ist, die Magnetschienenbremseinrichtung (40) zu deaktivieren, wenn vordefinierte Schienenzustandsbedingungen erreicht sind.

7. Bremssteuereinrichtung nach einem der bisherigen Ansprüche, wobei die Bremssteuereinrichtung (24) ferner dazu ausgebildet ist, zu überwachen, ob die Schienenzustandsdaten während der Bremsung einen bestimmten vorgegebenen Schwellenwert erreichen, und die Magnetschienenbremseinrichtung (40) bei Erreichen eines Schwellenwertes zu aktivieren oder zu deaktivieren, insbesondere bei Erreichen eines ersten Schwellenwertes zu aktivieren und bei Erreichen eines zweiten Schwellenwertes zu deaktivieren.

8. Bremsanlage (10) für ein Schienenfahrzeug mit mindestens einer Magnetschienenbremseinrichtung (40) und einer Bremssteuereinrichtung (24) nach einem der Ansprüche 1 bis 7.

9. Schienenfahrzeug mit einer Bremsanlage (10) nach Anspruch 8 und/oder einer Bremssteuereinrichtung (24) nach einem der Ansprüche 1 bis 7.

10. Verfahren zum Ansteuern mindestens einer Magnetschienenbremseinrichtung (40) einer Bremsanlage (10) eines Schienenfahrzeugs, bei dem die mindestens eine Magnetschienenbremseinrichtung (40) von einer Bremssteuereinrichtung (24) basierend auf Schienenzustandsdaten angesteuert wird, wobei während der Bremsung eine Bestromung der Magnetschienenbremseinrichtung (40) von der Bremssteuereinrichtung (24) mit variierender Stromstärke angesteuert wird, wobei während einer Bremsung unter Berücksichtigung eines sich verbessernden Schienenzustands eine geringere Bestromung erfolgt.

## Claims

1. Brake control device (24) for a brake system (10) of a rail vehicle, wherein the brake control device (24) is designed to actuate at least one magnetic track brake device (40) of the brake system (10) based on rail state data **characterized in that** the brake control device (24) is designed to actuate supply of current to the magnetic track brake device (40) at a varying current intensity during braking, wherein less current can be supplied during braking taking into account an improving rail state.

2. Brake control device according to claim 1, wherein the brake control device (24) is further designed to actuate the magnetic track brake device (40) based on speed data.

3. Brake control device according to either of the preceding claims, wherein the rail state data comprises wheel slip data and/or wherein the rail state data comprises at least an adhesion and/or adhesion coefficient.

4. Brake control device according to one of the preceding claims, wherein the rail state data can be transmitted to the brake control device (24) by an antiskid device.

5. Brake control device according to of the preceding claims, wherein the rail state data relates to wheels which are arranged downstream of the at least one magnetic track brake device (40) and/or a frictional component (44) of the magnetic track brake device (40) in the direction of travel of the rail vehicle.

6. Brake control device according to one of the preceding claims, wherein the brake control device (24) is designed to deactivate the magnetic track brake device (40) when predefined rail state conditions are reached.

7. Brake control device according to one of the preceding claims, wherein the brake control device (24) is further designed to monitor whether the rail state data reaches a specific prespecified threshold value during braking, and to activate or to deactivate the magnetic track device (40) when a threshold value is reached, in particular to activate said magnetic track device when a first threshold value is reached and to deactivate said magnetic track device when a second threshold value is reached.

8. Brake system (10) for a rail vehicle having at least one magnetic track brake device (40) and a brake control device (24) according to one of Claims 1 to 7.

9. Rail vehicle having a brake system (10) according to Claim 8 and/or having a brake control device (24) according to one of Claims 1 to 7.

10. Method for actuating at least one magnetic track brake device (40) of a brake system (10) of a rail vehicle, in which method the at least one magnetic track brake device (40) is actuated by a brake control device (24) based on rail state data, wherein supply of current to the magnetic track brake device (40) is actuated by the brake control device (24) at a varying current intensity during braking, wherein less current can be supplied during braking taking into account an improving rail state.

## Revendications

1. Dispositif (24) de commande de frein pour un système (10) de freinage d'un véhicule ferroviaire,
dans lequel le dispositif (24) de commande de frein est constitué pour commander au moins un dispositif (40) de frein électromagnétique sur rail du système (10) de freinage sur la base de données d'état du rail,
**caractérisé en ce que**
le dispositif (24) de commande de frein est constitué pour, pendant un freinage, commander une alimentation en courant du dispositif (40) de frein électromagnétique sur rail par des intensités de courant variables, une alimentation en courant plus petite ayant lieu pendant un freinage en tenant compte d'un état du rail, qui s'améliore.

2. Dispositif de commande de frein suivant la revendication 1, dans lequel le dispositif (24) de commande de frein est constitué en outre pour commander le dispositif (40) de frein électromagnétique sur rail, sur la base de données de vitesse.

3. Dispositif de commande de frein suivant l'une des revendications précédentes, dans lequel les données d'état du rail comprennent des données de patinage et/ou les données d'état du rail concernent au moins une adhérence et/ou un coefficient d'adhérence.

4. Dispositif de commande de frein suivant l'une des revendications précédentes, dans lequel les données d'état du rail peuvent être transmises d'un dispositif d'anti-patinage au dispositif (24) de commande de frein.

5. Dispositif de commande de frein suivant l'une des revendications précédentes, dans lequel les données d'état du rail concernent des roues, qui sont disposées dans le sens de marche du véhicule ferroviaire, derrière le au moins un dispositif (40) de frein électromagnétique sur rail et/ou un composant (44) de friction du dispositif (40) de frein électromagnétique sur rail.

6. Dispositif de commande de frein suivant l'une des revendications précédentes, dans lequel le dispositif (24) de commande de frein est constitué pour désactiver le dispositif (40) de frein électromagnétique sur rail lorsque des conditions d'état du rail, définies à l'avance, sont atteintes.

7. Dispositif de commande de frein suivant l'une des revendications précédentes, dans lequel le dispositif (24) de commande de frein est constitué en outre pour contrôler si les données d'état de rail atteignent, pendant le freinage, une valeur de seuil définie donnée à l'avance et pour activer ou désactiver le dispositif (40) de frein électromagnétique sur rail lorsqu'une valeur de seuil est atteinte, notamment pour l'activer lorsqu'une première valeur de seuil est atteinte et pour le désactiver lorsqu'une deuxième valeur de seuil est atteinte.

8. Système (10) de frein pour un véhicule ferroviaire ayant au moins un dispositif (40) de frein électromagnétique sur rail et un dispositif (24) de commande de frein suivant l'une des revendications 1 à 7.

9. Véhicule ferroviaire ayant un système (10) de freinage suivant la revendication 8 et/ou un dispositif (24) de commande de frein suivant l'une des revendications 1 à 7.

10. Procédé de commande d'au moins un dispositif (40) de frein électromagnétique sur rail d'un système (10) de freinage d'un véhicule ferroviaire, dans lequel on commande le au moins un dispositif (40) de frein électromagnétique sur rail par un dispositif (24) de commande de frein sur la base de données d'état du rail, dans lequel, pendant le freinage, on commande une alimentation en courant du dispositif (40) de frein électromagnétique sur rail par le dispositif (24) de commande de frein par des intensités de courant variables, une alimentation en courant plus petite ayant lieu pendant un freinage en tenant compte d'un état du rail, qui s'améliore.
